# EUROPÄISCHE PATENTSCHRIFT

(11) **EP 3 738 703 B1**
(45) Veröffentlichungstag und Bekanntmachung des Hinweises auf die Patenterteilung: **16.08.2023**
(21) Anmeldenummer: 20169791.9
(22) Anmeldetag: 16.04.2020
(51) Int. Cl.: B23B 51/04, B25F 5/00, B25H 1/00, B23Q 17/09

(54) **VERFAHREN ZUM BETREIBEN EINER KERNBOHRMASCHINE SOWIE KERNBOHRMASCHINE UND KERNBOHRKRONE ZUR DURCHFÜHRUNG DES VERFAHRENS**
METHOD FOR OPERATING A CORE DRILLING MACHINE AS WELL AS CORE DRILLING MACHINE AND CORE DRILL BIT FOR CARRYING OUT THE METHOD
PROCÉDÉ DE FONCTIONNEMENT D'UNE CAROTTEUSE AINSI QUE CAROTTEUSE ET COURONNE DE CAROTTAGE DESTINÉES À LA MISE EN OEUVRE DUDIT PROCÉDÉ

(30) Priorität: 16.05.2019 DE 102019112999
(43) Veröffentlichungstag der Anmeldung: 18.11.2020
(73) Patentinhaber: C. & E. Fein GmbH, 73529 Schwäbisch Gmünd-Bargau (DE)
(72) Erfinder: Wachholz, Karsten, 73527 Schwäbisch Gmünd (DE); Kreb, Christian, 73529 Schwäbisch Gmünd-Bargau (DE); Seemann, Jakob, 73529 Schwäbisch Gmünd-Bargau (DE)
(74) Vertreter: Wallinger, Michael

(56) Entgegenhaltungen:
- EP-A1- 3 299 100
- US-A1- 2009 175 694
- US-B2- 7 431 682

## Beschreibung

Verfahren zum Betreiben einer Kernbohrmaschine sowie Kernbohrmaschine und Kernbohrkrone zur Durchführung des Verfahrens

Die Erfindung betrifft ein Verfahren zum Betreiben einer Kernbohrmaschine.

Außerdem betrifft die Erfindung eine Kernbohrmaschine und eine Kernbohrkrone zur Durchführung des Verfahrens.

Zum Bohren von Löchern mit großen Durchmessern in Stahlblechen oder Stahlträgern werden üblicherweise nicht handgeführte Bohrmaschinen mit einem Spiralbohrer, sondern Kernbohrmaschinen mit einer Kernbohrkrone verwendet. Diese Kernbohrmaschinen werden dabei mittels eines Magnetfußes auf dem Werkstück befestigt und dann automatisch oder manuell vorgetrieben. Durch die Kernbohrkrone, die eine hohlzylindrische Form hat, muss dabei nicht das Material des kompletten Lochdurchmessers aufgebohrt werden, sondern es wird letztlich durch die Schneide der Kernbohrkrone nur ein Hohlzylinder ausgeschnitten. Der zylinderförmige Rest fällt dann aus dem Stahlblech heraus oder bleibt in der Kernbohrkrone hängen. Bei Kernbohrmaschinen hat es sich jedoch als problematisch erwiesen, dass die verwendeten Kernbohrkronen durch die auftretende Hitze einem sehr starken Verschleiß unterliegen und damit nur eine begrenzte Standdauer aufweisen. Hierbei ist es für den Nutzer jedoch nur sehr schwer zu erkennen, wann die Schneidleistung der Kernbohrkrone nachlässt und wann er diese also letztlich wechseln bzw. nachschleifen muss. Zudem gibt es eine Vielzahl unterschiedlicher Kernbohrkronen, die sich alle hinsichtlich ihrer Standzeiten voneinander unterscheiden. So wird die Standzeit maßgeblich von dem Durchmesser der Kernbohrkrone sowie von dem verwendeten Material beeinflusst, aus dem die Kernbohrkrone oder deren Schneide gebildet ist. Auch weisen die einzelnen Kernbohrkronen unterschiedliche optimale Betriebsparameter auf. Ein Abweichen hiervon führt zu einem erhöhten Verschleiß und zu längeren Prozesszeiten.

EP 3 299 100 A1 offenbart ein Verfahren zum Betreiben einer elektrischen Kernbohrmaschine nach dem Oberbegriff des Anspruchs 1 und eine Kernbohrmaschine nach dem Oberbegriff des Anspruchs 8.

Aus der US 7,431,682 B2 ist eine Bohrkrone nach dem Oberbegriff des Anspruchs 11 bekannt, die einen

Informationsträger in Form eines RFID Chips enthält, der in einem Kopplungsschaft der Bohrkrone aufgenommen ist. Mit dem RFID Chip und einem darin integrierten Temperatursensor ist es möglich, die Temperatur der Bohrkrone zu erfassen und an den Nutzer auszugeben.

Der Erfindung liegt daher die Aufgabe zugrunde, ein verbessertes Betriebsverfahren für eine Kernbohrmaschine bereitzustellen. Außerdem ist es Aufgabe der vorliegenden Erfindung, eine verbesserte Kernbohrmaschine und eine verbesserte Bohrkrone bereitzustellen, mit denen das erfindungsgemäße Verfahren durchgeführt werden kann.

Die das Betriebsverfahren betreffende Aufgabe wird gemäß der Erfindung durch ein Verfahren zum Betreiben einer elektrischen Kernbohrmaschine nach Anspruch 1 gelöst, das die folgenden Schritte umfasst:
- Identifizieren einer mit der Kernbohrmaschine lösbar verbundenen Kernbohrkrone mittels eines der Kernbohrkrone zugeordneten Informationsträgers und einem der Kernbohrmaschine zugeordneten Informationsempfänger,
- Erfassen einer Belastungsgröße der Kernbohrkrone,
- Bestimmen eines Verschleißwertes der Kernbohrkrone anhand des Wertes der Belastungsgröße,
- Ausgeben eines Fehlerwertes, wenn der Verschleißwert eine Verschleißgrenzwert überschreitet, und
- Ausgeben eines Signals zur Anzeige der Notwendigkeit, die Kernbohrkrone auszutauschen und/oder zu reparieren.

Hierdurch wird letztlich ein Betriebsverfahren bereitgestellt, durch das die in der Kernbohrmaschine verwendete Kernbohrkrone automatisch identifiziert wird. Indem dann die Belastungsgröße der Kernbohrkrone erfasst wird, kann ein Verschleißwert anhand des Wertes dieser Belastungsgröße bestimmt werden. Überschreitet dieser Verschleißwert dann den Verschleißgrenzwert, so wird der Fehlerwert ausgegeben, mit welchem dem Nutzer angezeigt werden kann, dass dieser die Kernbohrkrone auswechseln und gegen eine neue Kernbohrkrone austauschen muss. Der Verschleißgrenzwert kann dabei auch explizit deutlich vor dem Lebensdauerende der Kernbohrkrone erreicht werden, um dem Nutzer durch das Signal mitzuteilen, dass er sich zeitnah um Ersatz für die Kernbohrkrone kümmern muss. Auch kann diese Information dazu genutzt werden, dem Nutzer automatisch eine neue oder reparierte Kernbohrkrone zukommen zu lassen, bevor die aktuell verwendete Kernbohrkrone ihre maximale Lebensdauer erreicht, wenn diese Information an den Hersteller übermittelt wird. Dies kann im Rahmen eines Leasings- oder Abo-Models erfolgen. Die Identifizierung der verwendeten Kernbohrkrone erfolgt dabei besonders bevorzugt simultan mit dem Einsetzen der Kernbohrkrone in eine Werkzeugaufnahme, kann aber auch davon vor- bzw. nachgelagert erfolgen. Insbesondere bei hochwertigen Kernbohrkronen ist dabei auch eine Reparatur möglich, indem die Schneide nachgeschliffen wird. Auf dem Informationsträger können dabei neben einer Seriennummer oder einer anderen Information, mit der sich die Kernbohrkrone identifizieren lässt, insbesondere sämtliche Produktionsparameter abgelegt sein. Damit kann dann bei Nachbestellungen oder Reklamationen auf das Produktionslos, das -datum, der Arbeiter, den Herstellungsort zurückgegriffen werden.

Als günstig hat es sich hierbei auch erwiesen, wenn das Identifizieren der Kernbohrkrone an der Kernbohrmaschine mittels NFC, RFID und/oder Bluetooth erfolgt. Hierdurch wird eine berührungslose Identifizierung der Kernbohrkrone an der Kernbohrmaschine ermöglicht, was sich positiv auf die Benutzerfreundlichkeit des erfindungsgemäßen Betriebsverfahrens auswirkt. Von dem Begriff "RFID" sind dabei sowohl die Varianten UHF (868MHz) und HF (13.56MHz) umfasst. Alternativ ist es im Rahmen der Erfindung auch vorgesehen, dass die Identifizierung durch einen Barcode, der den Informationsträgers bildet und einen korrespondierenden Scanner, der als Informationsempfänger dient, erfolgt.

Als besonders vorteilhat hat es sich auch erwiesen, wenn ein mindestens ein Betriebsparameter der Kernbohrmaschine an die verwendete Kernbohrkrone angepasst wird. Dies kann insbesondere die Drehzahl der Kernbohrmaschine sein. Hierdurch wird der Arbeitsfortschritt optimiert, da die Kernbohrmaschine stets im optimalen Drehzahlbereich arbeiten kann. Zudem lässt sich hierdurch auch die Lebensdauer der verwendeten Kernbohrkrone steigern. Auch die Kühlmittelzufuhr ist als ein Betriebsparameter aufzufassen.

Bewährt hat es sich zudem auch, wenn abhängig von der verwendeten Kernbohrkrone der optimale Vorschub angezeigt und/oder eingestellt wird. Hierdurch wird insbesondere berücksichtigt, dass unterschiedliche Kernbohrkronen unterschiedliche optimale Vorschübe aufweisen, sodass es möglich ist, den Vorschub entweder auf den optimalen Wert einzustellen, was bei einem automatischen Vorschub möglich ist, oder dem Nutzer den optimalen Wert bzw. Abweichungen davon anzuzeigen, wodurch das Arbeitsergebnis und die Arbeitsleistung verbessern werden.

Als günstig hat es sich auch gezeigt, wenn der Verschleißwert durch einen Vergleich zwischen dem erfassten Wert der Belastungsgröße und Kontrolldaten ermittelt wird, die auf einem Speicher hinterlegt sind. Somit kann beispielsweise mittels einer Vergleichsmessung zunächst das Abnutzungsverhalten verschiedener Kernbohrkronen einzeln erfasst und dann in dem Speicher hinterlegt werden. Wird nun die Kernbohrmaschine mit einer dieser Kernbohrkronen verwendet, so kann automatisch aus dem Vergleich zwischen dem Wert der Belastungsgröße und dem Kontrollwert auf den Verschleißwert rückgeschlossen werden.

Als vorteilhat hat es sich auch gezeigt, wenn die Belastungsgröße ausgewählt ist aus einer Gruppe, die die Betriebsstunden, die kumulierte Leistungsaufnahme, den Verlauf der Stromaufnahme der Kernbohrmaschine, den Gesamtvortrieb der Kernbohrmaschine und/oder die Anzahl der gebohrten Löcher umfasst. Diese Belastungsgrößen lassen sich dabei besonders einfach erfassen.

Bewährt hat es sich weiterhin, wenn das Signal mittels eines Senders von der Kernbohrmaschine an einen Empfänger versendet wird. Hierbei kann insbesondere der Fehlerwert und/oder der Wert der Belastungsgröße übermittelt werden. Alternativ und/oder ergänzend wird der Fehlerwert und/oder der Wert der Belastungsgröße in einer Speichereinheit der Kernbohrmaschine gespeichert. Auch hat es sich in diesem Zusammenhang bewährt, wenn der Wert der Belastungsgröße und/oder der Fehlerwert vom Nutzer ausgelesen wird. Das Signal kann aber auch akustisch oder optisch sein. Im Rahmen der Erfindung ist es dabei auch vorgesehen, dass der Nutzer den Wert der Belastungsgröße und/oder den Verschleißwert kontinuierlich oder bei Bedarf übermittelt und/oder angezeigt bekommt. Beispielsweise auf einem Smartphone.

Die die Kernbohrmaschine betreffende Aufgabe wird gemäß der Erfindung gelöst durch eine Kernbohrmaschine nach Anspruch 8, umfassend einen elektrischen Antrieb, mit dem eine Werkzeugaufnahme rotierend antreibbar ist, in der eine Kernbohrkrone lösbar befestigbar ist, einen Informationsempfänger zur Identifizierung der Kernbohrkrone, einen Sensor zur Erfassung einer Belastungsgröße der Kernbohrkrone, eine Auswerteeinheit zur Bestimmung eines Verschleißwertes der Kernbohrkrone anhand des Wertes der Belastungsgröße und eine Ausgabeeinheit zur Ausgabe eines Fehlerwertes beim Überschreiten eines Verschleißgrenzwerts. Hierdurch wird eine Kernbohrmaschine bereitgestellt, die es auf besonders einfache Art und Weise ermöglicht, die verwendete Kernbohrkrone zu identifizieren und deren Verschleiß zu erfassen.

Bewährt hat es sich dabei besonders auch, wenn der Sensor ausgelegt ist, die Betriebsstunden, die kumulierte Leistungsaufnahme, den Verlauf der Stromaufnahme der Kernbohrmaschine, den Gesamtvortrieb der Kernbohrmaschine und/oder die Anzahl der gebohrten Löcher zu erfassen. Hierdurch wird eine auf die Kernbohrkrone wirkende Belastungsgröße zuverlässig erfasst.

Als günstig hat es sich auch erwiesen, wenn der Informationsempfänger an einem Magnetfuß der Kernbohrmaschine, an einem Stützbügel der Kernbohrmaschine oder an einem Gehäuse der Kernbohrmaschine angeordnet ist. Besonders bewährt hat es sich in diesem Zusammenhang, wenn der Informationsempfänger dabei so angeordnet ist, dass die Identifizierung der Kernbohrkrone beim Einsetzen in die Werkzeugaufnahme erfolgt, wodurch verhindert wird, dass der Nutzer zwar eine erste Kernbohrkrone mit der Kernbohrmaschine koppelt, dann aber eine zweite Kernbohrkrone in die Werkzeugaufnahme einsetzt und mit dieser arbeitet. Die die Kernbohrkrone betreffende Aufgabe wird gemäß der Erfindung gelöst durch eine Kernbohrkrone nach Anspruch 11, umfassend ein distales erstes Ende mit einer Schneide und ein proximales zweites Ende mit einem Schaft zum Koppeln der Kernbohrkrone mit einer Kernbohrmaschine, wobei dem Schaft ein die Kernbohrkrone identifizierender Informationsträger zugeordnet ist. Hierdurch wird eine Kernbohrkrone geschaffen, die in einer entsprechenden Kernbohrmaschine identifiziert werden kann, um den Verschleiß der Kernbohrkrone überwachen zu können.

Erfindungsgemäß ist der Informationsträger als ein ringförmiger passiver Sender ausgebildet, der in einer an dem proximalen Ende des Schafts ausgebildeten Aussparung aufgenommen ist. Hierdurch lässt sich der Informationsträger, der beispielweise als ein passiver RFID-Sender gebildet ist, sicher an dem Schaft aufnehmen. Der Informationsträger kann dabei in die Aussparung eingeklebt werden.

Erfindungsgemäß ist die Aussparung als eine Ringnut ausgebildet.

Hierdurch werden Beschädigungen des Informationsträgers vermieden.

Im Folgenden wird die Erfindung an einem in den Zeichnungen dargestellten Ausführungsbeispiel näher erläutert; es zeigen:
- Fig. 1: eine perspektivische Ansicht einer erfindungsgemäßen Kernbohrmaschine, und
- Fig. 2: eine perspektivische Ansicht einer erfindungsgemäßen Kernbohrkrone.

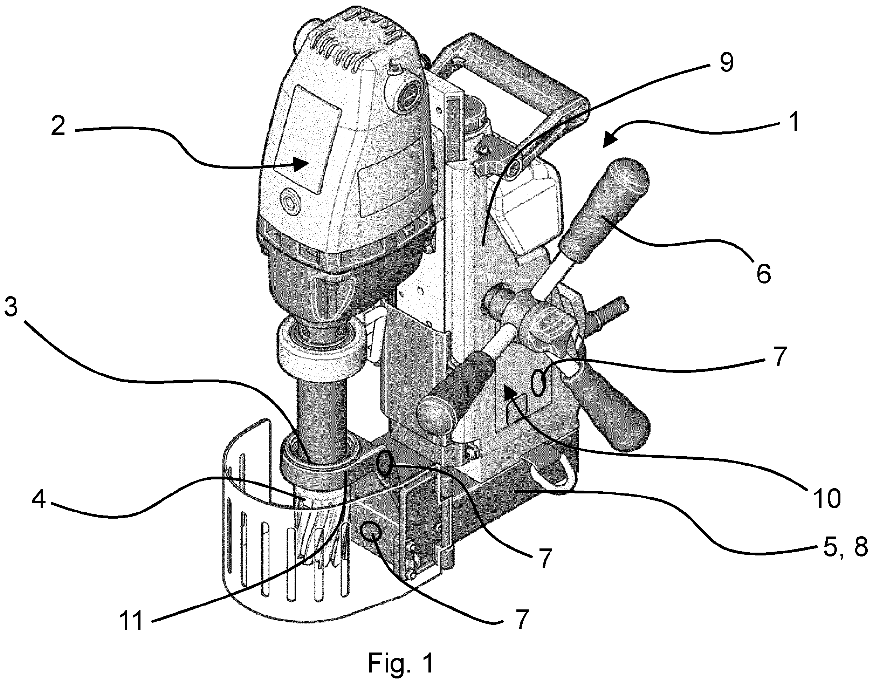

Figur 1 zeigt in einer perspektivischen Ansicht eine Kernbohrmaschine 1, die einen elektrischen Antrieb 2 umfasst, mit dem eine Werkzeugaufnahme 3 rotierend antreibbar ist. In der Werkzeugaufnahme 3 ist eine Kernbohrkrone 4 lösbar befestigt. Mittels eines Magnetfußes 5 lässt sich die Kernbohrmaschine 1 auf einem zu bearbeitenden Werkstück befestigen.

Durch ein Drehrad 6 wird der Teil der Kernbohrmaschine 1, der den Antrieb 2 und die Werkzeugaufnahme 3 beinhaltet, gegenüber einem die Elektronik enthaltenden Elektronikteil 10 axial verstellen. In der Kernbohrmaschine 1 ist ein Informationsempfänger 7 zur Identifizierung der Kernbohrkrone 4 enthalten. Dieser kann dabei an verschiedenen Stellen an der Kernbohrmaschine 1 befestigt sein. Exemplarisch ist in der Figur die Anordnung des Informationsempfängers 7 an einem Magnet 8 des Magnetfußes 5, an einem Gehäuse 9 des Elektronikteils 10 sowie an einem Stützbügel 11 gezeigt. Explizit sei darauf hingewiesen, dass es für die Identifizierung der Kernbohrkrone 4 ausreichend ist, lediglich einen der gezeigten Informationsempfänger 7 zu verwenden. In dem gezeigten Ausführungsbeispiel sind die schematisch angedeuteten Informationsempfänger 7 als RFID-Antennen ausgebildet, mit denen den Kernbohrkronen 4 zugeordnete Informationsträger 12, die als passive RFID-Sender ausgebildet sind, erfasst werden können. In der Kernbohrmaschine 1 ist ein Sensor angeordnet, der zur Erfassung einer Belastungsgröße der Kernbohrkrone 4 dient und die Betriebsstunden, die kumulierte Leistungsaufnahme, den Verlauf der Stromaufnahme der Kernbohrmaschine 1, den Gesamtvortrieb der Kernbohrmaschine 1 und/oder die Anzahl der gebohrten Löcher erfasst. Mit einer Auswerteeinheit lässt sich ein Verschleißwert der Kernbohrkrone 4 anhand des Wertes der Belastungsgröße bestimmen. Überschreitet der Verschleißwert einen Verschleißgrenzwert, so wird über eine Ausgabeeinheit ein Fehlerwert ausgegeben und ein Signal erzeugt, um dem Nutzer mitzuteilen, dass er die Kernbohrkrone 4 zeitnah austauschen muss.

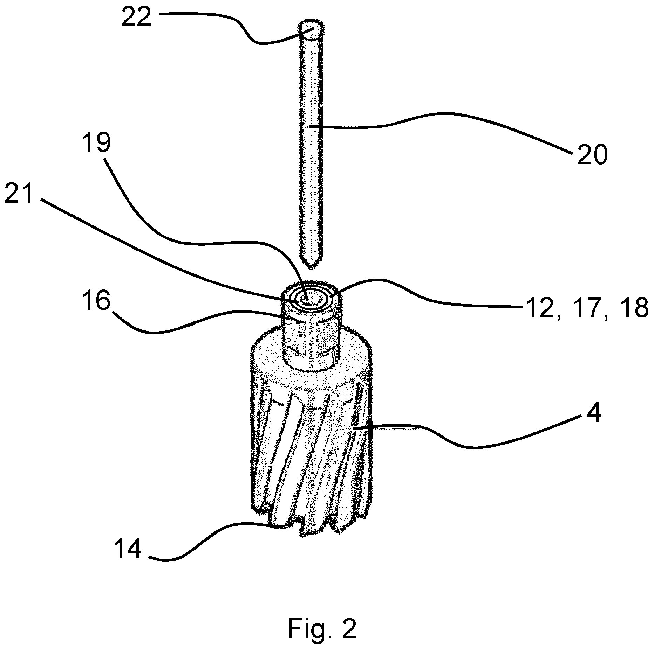

Figur 2 zeigt in einer perspektivischen Ansicht die Kernbohrkrone 4. Diese weist ein distales - also von der Werkzeugaufnahme 3 abgewandtes - erstes Ende 13 mit einer Schneide 14 sowie ein proximales - also der Werkzeugaufnahme 3 zugewandtes - zweites Ende 15 mit einem Schaft 16 zum Koppeln der Kernbohrkrone 4 mit einer Kernbohrmaschine 1 auf. Dem Schaft 16 ist dabei der die Kernbohrkrone 4 identifizierende Informationsträger 12 zugeordnet. Dieser ist in dem gezeigten Ausführungsbeispiel als ein ringförmiger passiver RFID-Sender ausgebildet, der in einer an dem proximalen Ende des Schafts 16 ausgebildeten Aussparung 17 aufgenommen ist. Die Aussparung 17 ist hierbei als eine Ringnut 18 ausgebildet, in die der Informationsträger 12 eingesetzt ist. Wie bei Kernbohrkronen 4 üblich, weist auch die in der Zeichnung dargestellte eine zentrale Durchgangsöffnung 19 auf, in die ein axial verschiebbarer Führungsstift 20 eingesetzt wird. Um ein Abschirmen des Informationsträgers 12 durch den Führungsstift 20 zu verhindern, liegt dieser im eingesetzten Zustand mit seinem Kopf 22 auf einem durch die Aussparung 17 gebildeten Rand 21 auf.

Im Folgenden wird noch einmal das erfindungsgemäße Verfahren zum Betreiben einer Kernbohrmaschine 1 anhand der in der Figur 1 dargestellten Kernbohrmaschine 1 näher erläutert. Zunächst wird mittels eines der Kernbohrkrone 4 zugeordneten Informationsträgers 12 und einem der Kernbohrmaschine 1 zugeordneten Informationsempfänger 7 die in der Werkzeugaufnahme 3 der Kernbohrmaschine 1 aufgenommene Kernbohrkrone 4 identifiziert. Wenn der Informationsempfänger 7 an dem Magneten 8 des Magnetfußes 5 angeordnet ist, so erfolgt die Identifizierung, wenn der Nutzer die Kernbohrkrone 4 in die Werkzeugaufnahme 3 der Kernbohrmaschine 1 einsetzt, da hierbei die Kernbohrkrone 4 an dem in dem Magneten 8 enthaltenen Informationsempfänger 7 vorbeigeführt wird und dabei identifiziert wird. Im Betrieb wird dann eine Belastungsgröße der Kernbohrkrone 4 erfasst und anhand des Wertes der Belastungsgröße ein Verschleißwert bestimmt. Dies erfolgt durch einen Vergleich zwischen dem Wert der erfassten Belastungsgröße und zuvor ermittelten Kontrolldaten, die auf einem Speicher hinterlegt sind. Überschreitet dieser Verschleißwert einen Verschleißgrenzwert, so wird ein Fehlerwert ausgegeben und dann als letzter Schritt dem Nutzer ein Signal ausgegeben, das ihm die Notwendigkeit anzeigt, die Kernbohrkrone 4 auszutauschen bzw. zu reparieren also bspw. nachzuschleifen. Dieses Signal wird dabei mittels eines Senders von der Kernbohrmaschine 1 an einen Empfänger versendet. Bei dem gezeigten Ausführungsbeispiel erfolgt das Identifizieren der Kernbohrkrone 4 an der Kernbohrmaschine 1 mittels RFID. Neben der Verschleißüberwachung wird mindestens ein Betriebsparameter der Kernbohrmaschine 1 an die verwendete Kernbohrkrone 4 angepasst und der für die jeweils verwendete Kernbohrkrone 4 optimale Vorschub eingestellt.

### Bezugszeichenliste

- 1: Kernbohrmaschine
- 2: Antrieb
- 3: Werkzeugaufnahme
- 4: Kernbohrkrone
- 5: Magnetfuß
- 6: Drehrad
- 7: Informationsempfänger
- 8: Magnet
- 9: Gehäuse
- 10: Elektronikteil
- 11: Stützbügel
- 12: Informationsträger
- 13: erstes Ende
- 14: Schneide
- 15: zweites Ende
- 16: Schaft
- 17: Aussparung
- 18: Ringnut
- 19: Durchgangsöffnung
- 20: Führungsstift
- 21: Rand
- 22: Kopf

## Patentansprüche

1. Verfahren zum Betreiben einer elektrischen Kernbohrmaschine (1), insbesondere einer Magnetkernbohrmaschine, umfassend die Schritte:
- Identifizieren einer mit der Kernbohrmaschine (1) lösbar verbundenen Kernbohrkrone (4) mittels eines der Kernbohrkrone (4) zugeordneten Informationsträgers (12) und einem der Kernbohrmaschine (1) zugeordneten Informationsempfänger (7),
- Erfassen einer Belastungsgröße der Kernbohrkrone (4),
**gekennzeichnet durch** die Schritte:
- Bestimmen eines Verschleißwertes der Kernbohrkrone (4) anhand des Werts der Belastungsgröße, und
- Ausgeben eines Fehlerwertes, wenn der Verschleißwert einen Verschleißgrenzwert überschreitet, und
- Ausgeben eines Signals zur Anzeige der Notwendigkeit, die Kernbohrkrone (4) auszutauschen und/oder zu reparieren.

2. Verfahren nach Anspruch 1, **dadurch gekennzeichnet, dass** das Identifizieren der Kernbohrkrone (4) an der Kernbohrmaschine (1) mittels NFC, RFID und/oder Bluetooth erfolgt.

3. Verfahren nach Anspruch 1 oder 2, **dadurch gekennzeichnet, dass** mindestens ein Betriebsparameter der Kernbohrmaschine (1) an die verwendete Kernbohrkrone (4) angepasst wird.

4. Verfahren nach einem der Ansprüche 1 bis 3, **dadurch gekennzeichnet, dass** abhängig von der verwendeten Kernbohrkrone (4) der optimale Vorschub angezeigt und/oder eingestellt wird.

5. Verfahren nach einem der Ansprüche 1 bis 4, **dadurch gekennzeichnet, dass** der Verschleißwert durch einen Vergleich zwischen dem Wert der erfassten Belastungsgröße und Kontrolldaten ermittelt wird, die auf einem Speicher hinterlegt sind.

6. Verfahren nach einem der Ansprüche 1 bis 5, **dadurch gekennzeichnet, dass** die Belastungsgröße ausgewählt ist aus einer Gruppe, die die Betriebsstunden, die kumulierte Leistungsaufnahme, den Verlauf der Stromaufnahme der Kernbohrmaschine (1), den Gesamtvortrieb der Kernbohrmaschine (1) und/oder die Anzahl der gebohrten Löcher umfasst.

7. Verfahren nach einem der Ansprüche 1 bis 6, **dadurch gekennzeichnet, dass** das Signal mittels eines Senders von der Kernbohrmaschine (1) an einen Empfänger versendet wird.

8. Kernbohrmaschine (1) umfassend einen elektrischen Antrieb (2), mit dem eine Werkzeugaufnahme (3) rotierend antreibbar ist, in die eine Kernbohrkrone (4) lösbar befestigbar ist, einen Informationsempfänger (7) zur Identifizierung der Kernbohrkrone (4), und einen Sensor zur Erfassung von einer Belastungsgröße der Kernbohrkrone (4), **gekennzeichnet durch** eine Auswerteeinheit zur Bestimmung eines Verschleißwertes der Kernbohrkrone (4) anhand des Wertes der Belastungsgröße und eine Ausgabeeinheit zur Ausgabe eines Fehlerwertes beim Überschreiten eines Verschleißgrenzwerts, und **dadurch gekennzeichnet, dass** die Kernbohrmaschine (1) zur Durchführung des Verfahrens nach einem der Ansprüche 1 bis 7 geeignet ist.

9. Kernbohrmaschine (1) nach Anspruch 8, **dadurch gekennzeichnet, dass** der Sensor ausgelegt ist, die Betriebsstunden, die kumulierte Leistungsaufnahme, den Verlauf der Stromaufnahme der Kernbohrmaschine (1), den Gesamtvortrieb der Kernbohrmaschine (1) und/oder die Anzahl der gebohrten Löcher zu erfassen.

10. Kernbohrmaschine (1) nach Anspruch 8 oder 9, **dadurch gekennzeichnet, dass** der Informationsempfänger (7) an einem Magneten (8) der Kernbohrmaschine (1), an einem Stützbügel (11) der Kernbohrmaschine (1) oder an einem Gehäuse (9) der Kernbohrmaschine (1) angeordnet ist.

11. Kernbohrkrone (4) umfassend ein distales erstes Ende (13) mit einer Schneide (14) und ein proximales zweites Ende (15) mit einem Schaft (16) zum Koppeln der Kernbohrkrone (4) mit einer Kernbohrmaschine (1), wobei dem Schaft (16) ein die Kernbohrkrone (4) identifizierender Informationsträger (12) zugeordnet ist, **dadurch gekennzeichnet, dass** der Informationsträger (12) als ein ringförmiger passiver Sender ausgebildet ist, der in einer an dem proximalen Ende des Schafts (16) ausgebildeten Aussparung (17) aufgenommen ist, dass die Aussparung (17) als eine Ringnut (18) ausgebildet ist, und dass die Kernbohrkrone (4) zur Durchführung des Verfahrens nach einem der Ansprüche 1 bis 7 geeignet ist.

## Claims

1. Method of operating an electric core drilling machine (1), in particular a magnetic core drilling machine, comprising the steps:
- Identifying a core drill bit (4) detachably connected to the core drilling machine (1) by means of an information carrier (12) associated with the core drill bit (4) and an information receiver (7) associated with the core drilling machine (1),
- detecting a load variable of the core drill bit (4), **characterized by** the steps of:
- determining a wear value of the core drill bit (4) on the basis of the value of the load variable, and
- outputting an error value, if the wear value exceeds a wear limit value, and
- outputting a signal indicating the need to replace and/or repaired the core drill bit (4).

2. Method according to claim 1, **characterized in that** the identification of the core drill bit (4) at the core drilling machine (1) is performed by means of NFC, RFID and/or Bluetooth.

3. Method according to claim 1 or 2, **characterized in that** at least one operating parameter of the core drilling machine (1) is adapted to the core drill bit (4) used.

4. Method according to one of the claims 1 to 3, **characterized in that** the optimum feed rate is displayed and/or set depending on the core drill bit (4) used.

5. Method according to any one of claims 1 to 4, **characterized in that** the wear value is determined by a comparison between the value of the detected load variable and control data stored on a memory.

6. Method according to any one of claims 1 to 5, **characterized in that** the load variable is selected from a group comprising the operating hours, the cumulative power consumption, the course of the current consumption of the core drilling machine (1), the total advance of the core drilling machine (1) and/or the number of holes drilled.

7. Method according to any one of claims 1 to 6, **characterized in that** the signal is sent by means of a transmitter from the core drilling machine (1) to a receiver.

8. Core drilling machine (1) comprising an electric drive (2) by means of which a tool holder (3) can be driven in rotation, in which a core drill bit (4) can be detachably fastened, an information receiver (7) for identifying the core drill bit (4), and a sensor for detecting a load variable of the core drill bit (4), **characterized by** an evaluation unit for determining a wear value of the core drill bit (4) on the basis of the value of the load variable, and an output unit for outputting an error value when a wear limit value is exceeded, and **characterized in that** the core drilling machine (1) is configured for carrying out the method according to one of claims 1 to 7.

9. Core drilling machine (1) according to claim 8, **characterized in that** the sensor is designed to detect the operating hours, the cumulative power consumption, the course of the current consumption of the core drilling machine (1), the total advance of the core drilling machine (1) and/or the number of holes drilled.

10. Core drilling machine (1) according to claim 8 or 9, **characterized in that** the information receiver (7) is arranged on a magnet (8) of the core drilling machine (1), on a support bracket (11) of the core drilling machine (1) or on a housing (9) of the core drilling machine (1).

11. Core drill bit (4) comprising a distal first end (13) with a cutting edge (14) and a proximal second end (15) with a shaft (16) for coupling the core drill bit (4) to a core drilling machine (1), wherein an information carrier (12) identifying the core drill bit (4) is associated with the shaft (16), **characterized in that** the information carrier (12) is configured as an annular passive transmitter, which is accommodated in a recess (17) formed at the proximal end of the shaft (16), that the recess (17) is configured as an annular groove (18), and that the core drill bit (4) is configured for carrying out the method according to one of claims 1 to 7.

## Revendications

1. Procédé pour faire fonctionner une machine de carottage (1) électrique, en particulier une machine de carottage magnétique, comprenant les étapes :
- d'identification d'une couronne de carottage (4) reliée de manière détachable à la machine de carottage (1) au moyen d'un support d'informations (12) associé à la couronne de carottage (4) et d'un récepteur d'informations (7) associé à la machine de carottage (1),
- d'acquisition d'une grandeur de charge de la couronne de carottage (4),
**caractérisé par** les étapes :
- de détermination d'une valeur d'usure de la couronne de carottage (4) à l'aide de la valeur de la grandeur de charge, et
- d'émission d'une valeur d'erreur, lorsque la valeur d'usure dépasse une valeur limite d'usure, et
- d'émission d'un signal pour indiquer la nécessité de remplacer et/ou de réparer la couronne de carottage (4).

2. Procédé selon la revendication 1, **caractérisé en ce que** l'identification de la couronne de carottage (4) sur la machine de carottage (1) s'effectue par NFC, RFID et/ou Bluetooth.

3. Procédé selon la revendication 1 ou 2, **caractérisé en ce qu'**au moins un paramètre de fonctionnement de la machine de carottage (1) est adapté à la couronne de carottage (4) utilisée.

4. Procédé selon l'une quelconque des revendications 1 à 3, **caractérisé en ce que** l'avance optimale est indiquée et/ou réglée en fonction de la couronne de carottage (4) utilisée.

5. Procédé selon l'une quelconque des revendications 1 à 4, **caractérisé en ce que** la valeur d'usure est déterminée par une comparaison entre la valeur de la grandeur de charge acquise et des données de contrôle, qui sont enregistrées sur une mémoire.

6. Procédé selon l'une quelconque des revendications 1 à 5, **caractérisé en ce que** la grandeur de charge est choisie dans un groupe qui comprend les heures de fonctionnement, la puissance absorbée cumulée, la variation de la consommation de courant de la machine de carottage (1), l'avancement total de la machine de carottage (1) et/ou le nombre de trous carottés.

7. Procédé selon l'une quelconque des revendications 1 à 6, **caractérisé en ce que** le signal est envoyé à un récepteur à partir de la machine de carottage (1) au moyen d'un émetteur.

8. Machine de carottage (1), comprenant un entraînement électrique (2), avec lequel un logement d'outil (3) peut être entraîné en rotation, dans lequel une couronne de carottage (4) peut être fixée de manière détachable, un récepteur d'informations (7) pour l'identification de la couronne de carottage (4), et un capteur pour l'acquisition d'une grandeur de charge de la couronne de carottage (4),
**caractérisée par** une unité d'évaluation pour la détermination d'une valeur d'usure de la couronne de carottage (4) à l'aide de la valeur de la grandeur de charge et une unité d'émission pour l'émission d'une valeur d'erreur lors du dépassement d'une valeur limite d'usure, et **caractérisée en ce que** la machine de carottage (1) est adaptée pour la mise en œuvre du procédé selon l'une quelconque des revendications 1 à 7 .

9. Machine de carottage (1) selon la revendication 8, **caractérisée en ce que** le capteur est conçu pour acquérir les heures de fonctionnement, la puissance absorbée cumulée, la variation de la consommation de courant de la machine de carottage (1), l'avancement total de la machine de carottage (1) et/ou le nombre de trous carottés.

10. Machine de carottage (1) selon la revendication 8 ou 9, **caractérisé en ce que** le récepteur d'informations (7) est disposé sur un aimant (8) de la machine de carottage (1), sur un étrier d'appui (11) de la machine de carottage (1) ou sur un carter (9) de la machine de carottage (1).

11. Couronne de carottage (4) comprenant une première extrémité distale (13) avec un tranchant (14) et une deuxième extrémité proximale (15) avec une tige (16) pour l'accouplement de la couronne de carottage (4) à une machine de carottage (1), dans laquelle un support d'informations (12) identifiant la couronne de carottage (4) est associé à la tige (16), **caractérisée en ce que** le support d'informations (12) est réalisé sous la forme d'un émetteur passif annulaire, qui est reçu dans un évidement (17) réalisé sur l'extrémité proximale de la tige (16), que l'évidement (17) est réalisé sous la forme d'une rainure annulaire (18), et que la couronne de carottage (4) est adaptée pour la mise en œuvre du procédé selon l'une quelconque des revendications 1 à 7.
